# EUROPEAN PATENT SPECIFICATION

(11) **EP 0 622 433 B1**
(45) Date of publication and mention of the grant of the patent: **23.04.1997**
(21) Application number: 94301450.6
(22) Date of filing: 01.03.1994
(51) Int. Cl.: C09J 131/04, C08F 8/44

(54) **Laminating construction adhesive compositions with improved performance**
Verbesserte Adhäsiv-Zusammensetzungen für Laminate
Compositions à performance améliorée pour de constructions laminées

(30) Priority: 30.04.1993 US 56264
(43) Date of publication of application: 02.11.1994
(73) Proprietor: ROHM AND HAAS COMPANY, Philadelphia, Pennsylvania 19106-2399 (US)
(72) Inventor: Eisenhart, Eric Karl, Doylestown, Pennsylvania 18901 (US); Eisenhart, Joann Marie, Doylestown, Pennsylvania 18901 (US); Bartman, Benjamin, Maples Glen, Pennsylvania 19002 (US); Hughes, Kathleen Anne, Blue Bell, Pennsylvania 19422 (US)
(74) Representative: Tanner, James Percival

(56) References cited:
- EP-A- 0 373 313
- DE-A- 4 123 739
- US-A- 3 264 272
- DATABASE WPI Week 8625, Derwent Publications Ltd., London, GB; AN 86-158030 & JP-A-61 089 276 (IDEMITSU) 7 May 1986
- DATABASE WPI Week 7803, Derwent Publications Ltd., London, GB; AN 78-05037A & JP-A-52 142 686 (TOYO SODA) 28 November 1977
- DATABASE WPI Week 8625, Derwent Publications Ltd., London, GB; AN 86-158030 & JP-A-61 089 276
- DATABASE WPI Week 7803, Derwent Publications Ltd., London, GB; AN 78-05037A & JP-A-52 142 686

## Description

The present invention relates to laminating construction adhesive compositions with improved performance.

Major portions of the laminating adhesives industry such as, for example, the construction adhesives industry require a laminating adhesive to permanently bond films and foils including plastic films such as, for example, plasticized polyvinyl chloride films and cellulosic foils such as, for example, decorative (printed) paper foils to construction substrates. Construction substrates include porous substrates such as, for example, particle board, plywood, hardboard, pressboard, chipboard, fiberboard, and strandboard.

Present adhesives cannot achieve a useful balance of high temperature and ambient temperature property performance in a one-part adhesive composition. In a one-part adhesive composition, a relatively hard copolymer will deliver adequate high temperature performance; however, ambient temperature performance may be inadequate. Adding a plasticizer to a relatively hard copolymer improves the ambient temperature adhesive performance but only with attrition in high temperature adhesive performance.

One solution to this problem is to employ a two-part adhesive composition in which at least one reactive copolymer is mixed with a second reactive agent, which may be low in molecular weight or polymeric. Such two-part systems are problematic in terms of handling, expense, and stability of the admixed composition.

US-A-4,694,056 discloses an aqueous pressure sensitive adhesive containing a copolymer of an alkyl acrylate or vinyl ester, or both, an acid functional comonomer, and a polyfunctional copolymerizable monomer.

US-A-5,100,944 discloses a water-borne packaging and converting adhesive which contains 10-98 parts dispersion of a vinyl acetate homo-/co-/ter-polymer, 2-30 parts by weight of plasticizer, and 1-20 parts by weight of ethylene glycol diacetate (EGDA) as the sole organic solvent. US-A-4,540,739 discloses aqueous based pressure sensitive adhesives which incorporate a latex which contains from about 0.5 to about 40 weight percent of a C₃₋₉ ethylenically unsaturated carboxylic acid, the latex having been neutralized to a pH of equal to or greater than about 6 with an alkali metal hydroxide or salt.

The present invention seeks to overcome the problems associated with the prior art.

In accordance with the present invention there is provided a composition, particularly suitable for use as a one-part aqueous laminating construction adhesive composition, comprising an adhesive copolymer consisting essentially of a vinyl ester/ethylene copolymer comprising a copolymerized carboxylic acid monomer, said vinyl ester/ethylene copolymer having a glass transition temperature from 0°C to about - 15°C; wherein said copolymerized carboxylic acid is neutralized with from 1% to 10% of a nonvolatile base, by weight based on said vinyl ester/ethylene copolymer weight.

In accordance with the present invention there is also provided a method of laminating a film or foil substrate and a construction substrate comprising:
(a) optionally forming a one-part aqueous laminating adhesive composition comprising an adhesive copolymer consisting essentially of a vinyl ester/ethylene copolymer comprising a copolymerized carboxylic acid monomer, said vinyl ester/ethylene copolymer having a glass transition temperature from 0°C to -15°C, wherein said copolymerized carboxylic acid is neutralized with from 1% to 10% of a nonvolatile base, by weight based on said vinyl ester/ethylene copolymer weight;
(b) applying said composition to a first substrate;
(c) contacting said composition with a second substrate; and
(d) drying said composition.

In accordance with the present invention there is further provided a laminate prepared by the above mentioned method.

The advantages of the present invention are that the aqueous laminating construction adhesive compositions exhibit a good balance of high temperature and ambient temperature adhesion performance in a one-part adhesive composition.

Glass transition temperatures (Tgs) herein are those calculated as a weighted average of the homopolymer Tg values, that is, for calculating the Tg of a copolymer of monomers M1 and M2,

Tg(calc.)= w(M1) x Tg(M1) + w(M2) x Tg(M2),

wherein
Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2

The glass transition temperature of homopolymers may be found, for example, in "Polymer Handbook", edited by J. Brandrup and E.H. Immergut, Interscience Publishers.

The aqueous vinyl ester/ethylene copolymers of the composition of this invention contain at least one copolymerized vinyl ester. Vinyl esters are ethylenically unsaturated ester monomers such as, for example, vinyl acetate, vinyl propionate, and vinyl versatate. Vinyl acetate is preferred.

The aqueous vinyl ester/ethylene copolymers of the composition of this invention contain at least one copolymerized carboxylic acid such as (meth)acrylic acid monomer.

The aqueous vinyl ester/ethylene copolymers of the composition of this invention contain a copolymerized ethylenically unsaturated polar monomer such as, for example, a monomer containing a hydroxyl group such as, for example, hydroxyethyl (meth)acrylate, hydroxypropyl (meth)acrylate, alkylolated amides such as, for example N-methylol (meth)acrylamide; a monomer containing an amide group such as, for example, (meth)acrylamide; a monomer containing an amino group such as, for example, dimethylaminoethyl (meth)acrylate; and a monomer containing a carboxylic acid group, the anhydride, or the salt thereof, such as, for example, (meth)acrylic acid, maleic acid, itaconic acid, crotonic acid, sodium vinyl sulfonate, and fumaric acid; at a level from 0.1% to about 20% by weight, based on the weight of the copolymer.

Copolymerized ethylenically unsaturated carboxylic acid monomer at a level from about 0.2 to about 10% by weight, based on the weight of the copolymer is preferred. Copolymerized acrylic acid at a level from about 0.2 to about 10% by weight, based on the weight of the copolymer is more preferred.

When a carboxylic acid is incorporated into the aqueous vinyl ester/ethylene copolymer, the acid groups may be partially or wholly neutralized. Preferred is neutralization of about 5% to 200% of the equivalents of copolymerized acid. More preferred is neutralization of about 25% to 100% of the equivalents of copolymerized acid.

The copolymerized carboxylic acid group is neutralized with a nonvolatile base such that substantially all of the nonvolatile base remains in the adhesive composition during the drying process. The copolymerized carboxylic acid groups may be neutralized with inorganic or organic bases or with salts of bases with weak acids such as, for example, sodium formate, potassium lactate, sodium citrate, potassium acetate, and sodium carbonate.

When low levels of precrosslinking or gel content are desired, low levels of multi-ethylenically unsaturated monomers such as, for example, allyl (meth)acrylate, diallyl phthalate, 1,4-butylene glycol di(meth)acrylate and 1,6-hexanediol di(meth)acrylate may be used at a level of from about 0.01% to about 5 %, by weight based on the weight of the copolymer.

The aqueous vinyl ester/ethylene copolymers of this invention may be prepared by various addition polymerization techniques. Emulsion polymerization is preferred. The vinyl ester/ethylene emulsion copolymers may be prepared by techniques for polymerizing ethylenically-unsaturated monomers which are well known in the art. Colloidal stabilization, anionic or nonionic surfactant stabilization, or mixtures thereof, may be used. Stabilization by a colloidal stabilizer such as, for example, hydroxyethyl cellulose, N-vinyl pyrollidone, polyvinyl alcohol, partially acetylated polyvinyl alcohol, carboxymethyl cellulose and gum arabic is preferred. More preferred is stabilization by polyvinyl alcohol at a level from about 0.05% to about 10% by weight, based on the weight of the emulsion copolymer, plus a nonionic surfactant. The polymerization reaction may be initiated by various methods known in the art such as, for example, by using the thermal decomposition of an initiator and by using an oxidation-reduction reaction to generate free radicals to effect the polymerization.

Chain transfer agents including mercaptans, polymercaptans, and halogen compounds may be used in the polymerization mixture in order to moderate the molecular weight of the vinyl ester/ethylene emulsion copolymer. Generally, from 0% to about 5% by weight, based on the weight of the polymeric binder, of C₂ - C₂₀ alkyl mercaptans, 3-mercaptopropionic acid, or esters of 3-mercaptopropionic acid, may be used. Preferred is from 0.05% to about 0.75% by weight, based on the weight of the polymeric binder, of dodecyl mercaptan or methyl 3-mercaptopropionate.

The particles of the vinyl ester/ethylene emulsion copolymer are from about 100 nanometers to about 4000 nanometers in diameter, as measured using a Coulter LS-130 instrument, which employs a light scattering technique. Further, broad particle size distributions and polymodal particle size distributions such as those disclosed in US-A-4,384,056 and US-A-4,539,361 may be employed.

The solids content of the vinyl ester/ethylene emulsion copolymer may be from about 30% to about 70% by weight. Preferred is a solids content from about 45 to about 60% by weight.

The viscosity of the vinyl ester/ethylene emulsion copolymer may be from about 200 mNsm⁻² (cps.) to about 20,000 mNsm⁻² (cps.), as measured by a Brookfield viscometer (Model LVT using Spindle #3 at 12 RPM.). Preferred is a viscosity from about 200 mNsm⁻² (cps.) to about mNsm⁻² (cps.).

The aqueous laminating construction adhesive composition may contain, in addition to the vinyl ester/ethylene emulsion copolymer, conventional treatment components such as, for example, emulsifiers, pigments, fillers, anti-migration aids, coalescents, thickeners, humectants, wetting agents, biocides, plasticizers, organosilanes, anti-foaming agents, colorants, waxes, and anti-oxidants.

The aqueous laminating construction adhesive composition may be applied to a substrate by conventional techniques such as, for example, roll coating, rod coating, knife coating, gravure printing and curtain coating.

The aqueous laminating adhesive composition, after it is applied to a substrate, may be heated to effect drying. The duration and temperature of heating will affect the rate of drying, processability and handleability, and property development of the treated substrate. Heat treatment at about 30 °C. to about 250 °C. for a period of time between about 3 seconds to about 15 minutes may be carried out.

The aqueous laminating adhesive composition may be used for applications such as, for example, construction adhesives to permanently bond plastic or paper films such as, for example, plasticized or unplasticized polyvinyl chloride and printed paper foils; and construction substrates such as, for example particleboard, plywood, hardboard, pressboard, chipboard, fiberboard, and strandboard.

The present invention will now be described only by way of example.

### Evaluation of Adhesive Performance

Room Temperature Adhesion (Peel Strength). The adhesive was coated onto a 7.6 cm by 15.2 cm (3 inch x 6 inch) panel of birch plywood using a #38 wire wound rod. A 10.2 cm by 35.6 cm (4 inch x 14 inch) piece of 0.015 cm (6 mil) sandwich vinyl (plasticized polyvinyl chloride(PVC)) was laminated onto the adhesive by pressing three times with a hand-held roller. The laminates were stacked and pressed overnight with a 4.5 kg (10 lb.) weight. Two 2.54 cm (1") peel strips were cut into each laminate. The strips were peeled using an Instron tensile tester at a 180° angle, using a 25.4 cm/min (10 inch/min.) peel rate. The average value in pli of a 6" peel was recorded for each strip. The peel values from three strips (from three different test panels) were averaged to give the final peel strength.

High Temperature Adhesion. (Peel Test). Peel strips were prepared as described herein for the room temperature adhesion test. The laminates were placed in a 65.6°C (150°F) oven and equilibrated for an hour. The samples were removed from the oven one at a time and tested immediately, while hot. One strip from each laminate was peeled using an Instron tensile tester at a 180° angle, using a 25.4 cm/min (10 inch/min.) peel rate. The average value in pli of a 6" peel was recorded for each strip. The peel values from three strips (from three different test panels) were averaged to give the final peel strength.

High Temperature Adhesion. (Crosshatch Test; X-hatch Test). The adhesive was coated onto an approximately 7.6 cm by 15.2 cm (3 inch x 6 inch) panel of birch plywood using a #38 wire wound rod. A 10.2 cm by 35.6 cm (4 inch x 14 inch) piece of 0.015 cm (6 mil) sandwich vinyl was laminated onto the adhesive by pressing three times with a hand-held roller. The laminates were stacked and pressed overnight with a 4.5 kg (10 lb.) weight. An X was cut through the vinyl on the surface of each laminate using a razor blade. The laminates were placed in a 65.6°C (150°F) oven. The number of days until the underlying wood was visible through the X in the vinyl, caused by vinyl separation, was reported. In some cases, the vinyl showed no separation after several weeks in the oven, at which time the test was halted.

Neutralization of Copolymerized Acid. Samples were neutralized by adding an aqueous solution of the specified base or the salt of a base with a weak acid to the neat emulsion polymer, with stirring. The mixtures were stirred for 10 minutes after the addition. The equivalents of added neutralizer used were based on the desired degree of neutralization and the calculated equivalents of copolymerized acid in the polymer.

### Example 1. Effect of degree of neutralization on the adhesion of construction adhesive compositions containing vinyl acetate/ethylene copolymers.

An adhesive copolymer disclosed to be a polyvinyl alcohol-stabilized carboxylated vinyl acetate/ethylene copolymer with Tg=0°C (AIRFLEX 426) and an adhesive copolymer disclosed to be an hydroxyethyl cellulose-stabilized carboxylated vinyl acetate/ethylene copolymer with Tg=11°C (ELVACE 40722-00) were evaluated with and without neutralization with potassium hydroxide added on a weight % basis, solids on solids, for adhesion to vinyl substrate. Comparative A is an uncarboxylated commercial polymer (Tg=0°C) which is substantially composed of vinyl acetate and ethylene.

**Table 1.**

| Effect of KOH neutralization on performance. | | | |
|---|---|---|---|
| SAMPLE | R.T. PEEL | 150°F PEEL | 150°F CROSSHATCH |
| | | | |
| Comparative A | 8.3 | 5.4 | 7 days |
| " + 0.31% KOH | 8.2 | 4.4 | 7 days |
| " + 0.93% KOH | 8.0 | 5.4 | 7 days |
| " + 1.9% KOH | 6.7 | 5.6 | 7 days |
| " + 3.1% KOH | 5.9 | 5.4 | 8 days |
| " + 6.2% KOH | 4.9 | 4.7 | 6 days |
| " + 12.4% KOH | 4.9 | 4.1 | 6 days |
| | | | |
| Airflex 426 | 8.2 | 6.1 | 8 days |
| " + 0.31% KOH | 7.7 | 6.4 | > 15 days |
| " + 0.93% KOH | 7.2 | 6.3 | 7 days |
| " + 1.9% KOH | 6.6 | 7.1 | 6 days |
| " + 3.1% KOH | 6.8 | 7.5 | 7 days |
| " + 6.2% KOH | 6.7 | 5.2 | > 15 days |
| " + 12.4% KOH | 4.9 | 3.8 | > 15 days |
| | | | |
| Elvace 40722-00 | 8.4 | 4.2 | 2 days |
| " + 0.31% KOH | 9.0 | 4.2 | 2 days |
| " + 0.93% KOH | 9.5 | 5.3 | 2 days |
| " + 1.9% KOH | 9.1 | 5.7 | 1 day |
| " + 3.1% KOH | 8.6 | 5.6 | 1 day |
| " + 6.2% KOH | 6.3 | 4.8 | 1 day |
| " + 12.4% KOH | 6.2 | 4.8 | 2 days |

Neutralization with a strong nonvolatile base, potassium hydroxide, improves the high temperature performance of a carboxylated vinyl acetate/ethylene adhesive polymer when 150 F. peel strength and 150 F. crosshatch performance are taken as indicators. We believe that the adhesion performance drops off at high KOH levels due to the high amounts of salt introduced thereby.

### Example 2. Effect of degree of neutralization on the adhesion of construction adhesive compositions containing vinyl acetate/ethylene copolymers.

The adhesive copolymers of Example 1 were evaluated with and without neturalization with potassium acetate (KOAc) added on a weight % basis, solids on solids, for adhesion to vinyl substrate. Comparative A is an uncarboxylated commercial polymer (Tg=0°C) which is substantially composed of vinyl acetate and ethylene.

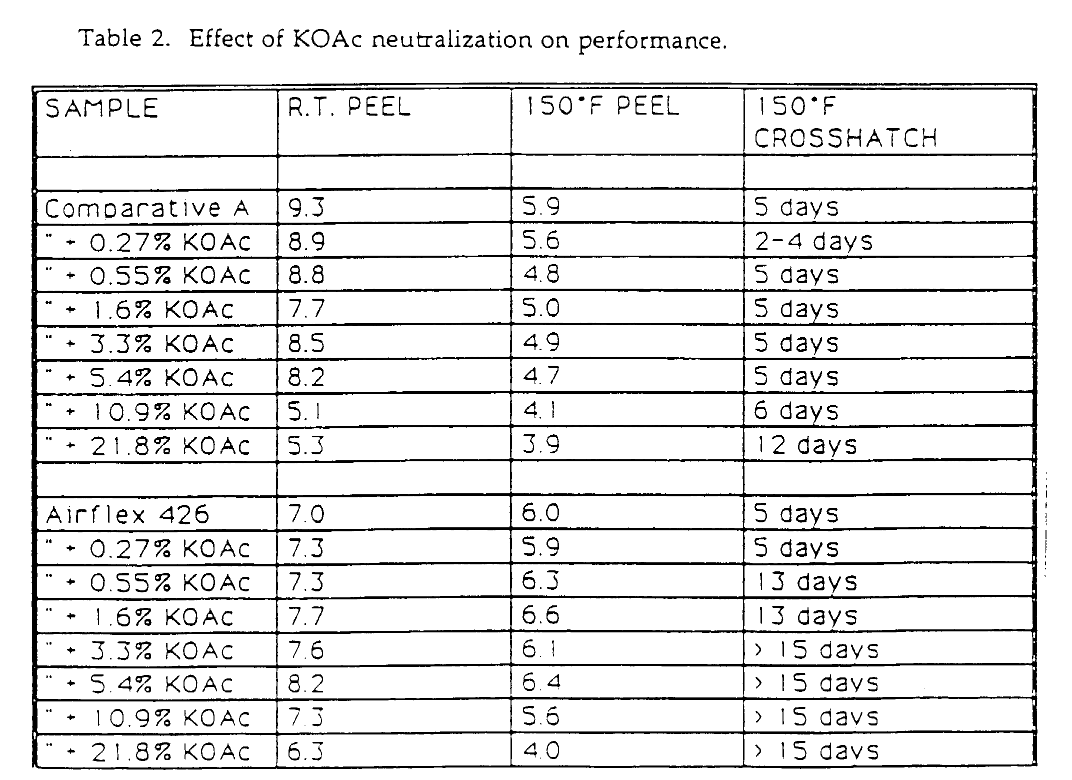

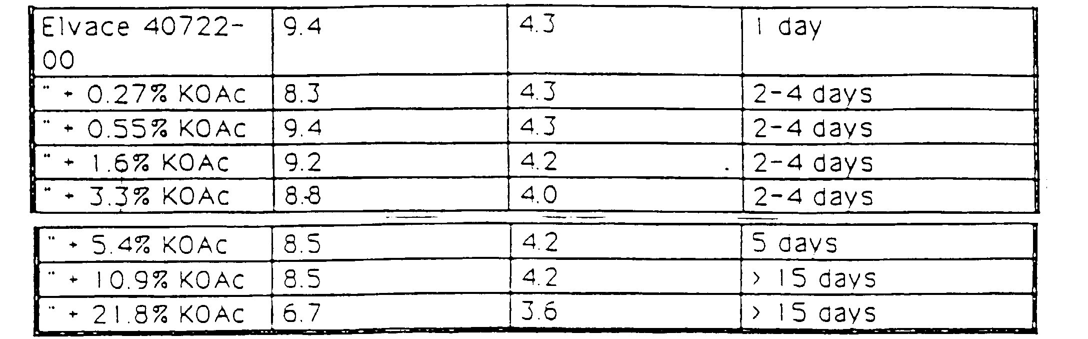

Neutralization with a nonvolatile weak acid salt, potassium acetate, improves the high temperature performance of a carboxylated vinyl acetate/ethylene adhesive polymer when 150 F. peel strength and 150 F. crosshatch performance are taken as indicators. We believe that the adhesion performance drops off at high KOAc levels due to the high amounts of salt introduced thereby.

## Claims

1. A composition, particularly suitable for use as a one-part aqueous laminating construction adhesive composition, comprising an adhesive copolymer consisting essentially of a vinyl ester/ethylene copolymer comprising a copolymerized carboxylic acid monomer, said vinyl ester/ethylene copolymer having a glass transition temperature from 0°C, to about - 15°C; wherein said copolymerized carboxylic acid is neutralized with from 1% to 10% of a nonvolatile base, by weight based on said vinyl ester/ethylene copolymer weight.

2. A method of laminating a film or foil substrate and a construction substrate comprising:
(a) forming a one-part aqueous laminating adhesive composition comprising an adhesive copolymer consisting essentially of a vinyl ester/ethylene copolymer comprising a copolymerized carboxylic acid monomer, said vinyl ester/ethylene copolymer having a glass transition temperature from 0°C, to - 15°C, wherein said copolymerized carboxylic acid is neutralized with from 1% to 10% of a nonvolatile base, by weight based on said vinyl ester/ethylene copolymer weight;
(b) applying said composition to a first substrate;
(c) contacting said composition with a second substrate; and
(d) drying said composition.

3. A laminate prepared by the method of claim 2.

## Patentansprüche

1. Stoffmischung, die sich besonders zur Verwendung als einteiliger, wäßriger laminierender Konstruktionskleber eignet und ein als Klebemittel dienendes Copolymer enthält, das im wesentlichen aus einem Vinylester/Ethylen-Copolymer besteht, welches eine monomere Carbonsäure copolymerisiert enthält, wobei das Vinylester/Ethylen-Copolymer eine Glasübergangstemperatur von 0°C bis etwa -15°C besitzt und wobei die copolymerisierte Carbonsäure mit 1% bis 10%, bezogen auf das Gewicht des Vinylester/Ethylen-Copolymeren, einer nichtflüchtigen Base neutralisiert ist.

2. Verfahren zum Laminieren eines Film- oder Foliensubstrats und eines Konstruktionssubstrats, bei dem man:
(a) einen einteiligen wäßrigen laminierenden Kleber herstellt, der ein als Klebemittel dienendes Copolymer enthält, das im wesentlichen aus einem Vinylester/Ethylen-Copolymer besteht, welches eine monomere Carbonsäure copolymerisiert enthält, wobei das Vinylester/Ethylen-Copolymer eine Glasübergangstemperatur von 0°C bis -15°C besitzt und wobei die copolymerisierte Carbonsäure mit 1% bis 10%, bezogen auf das Gewicht des Vinylester/Ethylen-Copolymeren, einer nichtflüchtigen Base neutralisiert ist;
(b) den Kleber auf ein erstes Substrat aufbringt;
(c) den Kleber mit einem zweiten Substrat in Berührung bringt; und
(d) den Kleber trocknet.

3. Laminat, hergestellt nach dem Verfahren des Anspruchs 2.

## Revendications

1. Composition qui convient particulièrement pour être utilisée comme composition adhésive aqueuse pour structures à contrecoller à un composant, comprenant un copolymère adhésif constitué essentiellement d'un copolymère d'ester vinylique et d'éthylène comprenant un monomère d'acide carboxylique copolymérisé, ledit copolymère d'ester vinylique et d'éthylène ayant une température de transition vitreuse de 0 à environ -15°C, composition dans laquelle ledit acide carboxylique copolymérisé est neutralisé par 1 à 10 % d'une base non volatile en poids sur la base du poids dudit copolymère d'ester vinylique et d'éthylène.

2. Procédé de contrecollage d'un substrat formé d'un film ou d'une feuille et d'un substrat de construction comprenant les étapes suivantes:
(a) on forme une composition adhésive aqueuse de contrecollage à un composant comprenant un copolymère adhésif constitué essentiellement d'un copolymère d'ester vinylique et d'éthylène comprenant un monomère d'acide carboxylique copolymérisé, ledit copolymère d'ester vinylique et d'éthylène ayant une température de transition vitreuse de 0 à -15°C, ledit acide carboxylique copolymérisé étant neutralisé par 1 à 10 % d'une base non volatile en poids sur la base du poids dudit copolymère d'ester vinylique et d'éthylène;
(b) on applique ladite composition à un premier substrat,
(c) on met en contact ladite composition avec un deuxième substrat; et
(d) on sèche ladite composition.

3. Stratifié ou contrecollé préparé par un procédé selon la revendication 2.
